# EUROPEAN PATENT APPLICATION

(11) **EP 4 765 412 A1**
(43) Date of publication of application: **24.06.2026**
(21) Application number: 25783156.0
(22) Date of filing: 03.04.2025
(51) Int. Cl.: H01M 50/30, H01M 50/342, H01M 50/178, H01M 50/184

(54) **POUCH-TYPE BATTERY CASE AND POUCH-TYPE SECONDARY BATTERY COMPRISING SAME**

(30) Priority: 03.04.2024 KR 20240045610
(71) Applicant: LG Energy Solution, Ltd., Seoul 07335 (KR)
(72) Inventor: PARK, Eun Suk, Daejeon 34122 (KR); HWANG, Ji Young, Daejeon 34122 (KR); LEE, Yu Jin, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Plasseraud IP
(86) International application number: PCT/KR2025/004444
(87) International publication number: WO 2025/211797

(57) **Abstract**

A pouch type battery case according to the present invention includes a cup portion provided with an accommodation space for accommodating an electrode assembly, a terrace portion formed along a perimeter of the accommodation portion, and at least one gas discharge portion, wherein each of the gas discharge portions includes a through hole formed in at least one of the cup portion or the terrace portion, a gas permeable film covering the through hole from the inside of the battery case, and a polymer-based protection film covering the through hole from the outside of the battery case, and the gas discharge portion having the structure described above exhibits excellent performance in preventing moisture penetration from the outside while continuously discharging gas, and thus may provide a pouch type secondary battery having improved safety and lifespan.

## Description

### TECHNICAL FIELD

### Cross-reference to Related Applications

The present application claims the benefit of the priority of Korean Patent Application No. 10-2024-0045610, filed on April 3, 2024, which is hereby incorporated by reference in its entirety.

### Technical Field

The present invention relates to a pouch type battery case and a pouch type secondary battery including the same, and more particularly, to a pouch type battery case including a gas discharge portion exhibiting superior moisture blocking performance, and a pouch type secondary battery including the same.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a ductile pouch film laminate to form a cup portion, and then accommodating an electrode assembly in an accommodation space inside the cup portion and sealing a sealing portion.

The pouch type secondary batteries may generate gas inside a pouch when operated at high temperatures, overcharged, or brought with a short circuit. When the gas pressure inside the pouch increases, the pouch may get vented to explode or ignite. To overcome the limitations described above, a component designed to continuously discharge gas without stopping battery operation is required.

Although extensive research is underway to incorporate valve type gas discharge components for discharging gas generated inside batteries, most valve type gas discharge components are made of heavy materials and require high operating pressure, often failing to address swelling induced by gas generation.

Accordingly, efforts are being made to develop a gas discharge component by modifying a lead film in an electrode lead portion or by punching a hole in a portion of a battery case and sealing the hole with a gas permeable film to allow only gas to pass through while preventing the migration of moisture and electrolyte.

However, in the case of a film that allows only gas to pass through as described above, depending on the material used, when gas permeability is high, a greater chance of liquid penetration and poor adhesion to the battery case are concerns, and when the chances of liquid penetration are to be reduced to zero, the desired level of gas discharge performance is not achievable.

In addition, the dimensional characteristics of the elements constituting the gas discharge component cause variations in gas discharge performance or liquid blocking performance, and given specific dimensions that may affect gas discharge performance have not been clearly identified, in-depth research is required to develop a gas discharge component exhibiting superior performance.

### DISCLOSURE OF THE INVENTION

### TECHNICAL PROBLEM

The present invention is designed to overcome the limitations described above, and thus, an aspect of the present invention provides a pouch type battery case exhibiting excellent performance in moisture blocking and gas discharge by being designed to include a through hole that connects the inside and outside of the case and a gas permeable film covering the through hole from the inside, and further include a polymer-based protection film covering the through hole from the outside of the battery case.

In addition, the present invention is designed to overcome the limitations described above, and thus, another aspect of the present invention provides a pouch type secondary battery exhibiting superior safety and enhanced lifespan by applying the pouch type battery case described above.

### TECHNICAL SOLUTION

[1] According to an aspect of the present invention, there is provided a pouch type battery case including a cup portion provided with an accommodation space for accommodating an electrode assembly, a terrace portion formed along a perimeter of the accommodation portion, and at least one gas discharge portion, wherein each of the gas discharge portions includes a through hole formed in at least one of the cup portion or the terrace portion, a gas permeable film covering the through hole from the inside of the battery case, and a polymer-based protection film covering the through hole from the outside of the battery case.
[2] The present invention provides the pouch type battery case according to [1] above, wherein the polymer-based protection film may include at least one selected from the group consisting of polypropylene, polyethylene, polytetrafluoroethylene, fluorinated ethylene propylene copolymer, perfluoroalkoxy-substituted polytetrafluoroethylene, and ethylene tetrafluoroethylene copolymer.
[3] The present invention provides the pouch type battery case according to [1] and/or [2] above, wherein the polymer-based protection film may be provided with a case adhesive portion in contact with a battery case around the through hole, and a portion of the polymer-based protection film may be inserted into the battery case at the case adhesive portion.
[4] The present invention provides the pouch type battery case according to [1] and/or [2] above, wherein the polymer-based protection film may be provided with a film adhesive portion in contact with a gas permeable film within the through hole.
[5] The present invention provides the pouch type battery case according to [4] above, wherein the polymer-based protection film may have an area greater than an area of the through hole, and the sealing portion may have an area smaller than the area of the through hole.
[6] The present invention provides the pouch type battery case according to at least one of [1] to [5] above, wherein the polymer-based protection film may include a water-repellent coating layer on a surface exposed to the outside of the battery case.
[7] The present invention provides the pouch type battery case according to at least one of [1] to [6] above, wherein the polymer-based protection film may include a ceramic filler therein.
[8] The present invention provides the pouch type battery case according to [7] above, wherein the ceramic filler may include at least one selected from the group consisting of CaCO₃, Ca(OH)₂, CaCl₂, CaO, KOH, NaOH, and Na₂CO₃.
[9] The present invention provides the pouch type battery case according to at least one of [1] to [8] above, wherein the gas permeable film may include an adhesive resin layer in contact with the battery case around the through hole, and a permeable resin layer disposed on the adhesive resin layer.
[10] The present invention provides the pouch type battery case according to [9] above, wherein the adhesive resin layer may include a non-fluorinated polyolefin-based resin.
[11] The present invention provides the pouch type battery case according to [9] and/or [10] above, wherein the adhesive resin layer may include a non-fluorinated polyolefin-based resin.
[12] The present invention provides the pouch type battery case according to at least one of [1] to [11] above, wherein the gas discharge portion may be formed in at least one position selected from the terrace portion, and the cup portion positioned adjacent to the terrace portion and having no internal contact with the electrode assembly.
[13] The present invention provides the pouch type battery case according to at least one of [1] to [12] above, wherein the gas discharge portion may be disposed such that the adhesive resin layer comes into contact with the pouch type battery case.
[14] According to another aspect of the present invention, there is provided a pouch type secondary battery including an electrode assembly, the pouch type battery case described above, an electrode lead connected to the electrode assembly and protruding to the outside of the pouch type battery case via the terrace portion, and a lead film disposed between the electrode lead and the pouch type battery case on the terrace portion, wherein a portion of the terrace portion is sealed along a perimeter of the cup portion to form a sealing portion.
[15] According to another aspect of the present invention, there is provided a battery box including a plurality of pouch type secondary batteries according to claim 14, and a packaging for accommodating the pouch type secondary batteries.

### ADVANTAGEOUS EFFECTS

A pouch type battery case according to the present invention may be achieved as a pouch type battery case having a gas discharge portion, as designed to include a through hole that connects the inside and outside of the case, a gas permeable film covering the through hole from the inside, and a polymer-based protection film covering the through hole from the outside of the battery case, keeping gas discharge to at least an appropriate level and exhibiting excellent performance in moisture blocking.

In addition, a pouch type secondary battery according to the present invention may exhibit superior safety and enhanced durability, contributing to improved lifespan by applying the pouch type battery case described above.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.
FIG. 1 is an exploded view of a pouch type secondary battery;
FIG. 2 is a plan view of a pouch type secondary battery according to an embodiment of the present invention;
FIG. 3 is a cross-sectional view of a portion in which a gas discharge portion of a pouch type secondary battery according to an embodiment of the present invention is provided;
FIG. 4 is an enlarged cross-sectional view of a portion in which a gas discharge portion of a pouch type secondary battery according to an embodiment of the present invention is provided;
FIG. 5 is an enlarged cross-sectional view of a portion in which a gas discharge portion of a pouch type secondary battery according to an embodiment of the present invention is provided; and
FIG. 6 is an enlarged cross-sectional view of a portion in which a gas discharge portion of a pouch type secondary battery according to an embodiment of the present invention is provided.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the present invention but for describing embodiments. As used herein, singular terms are intended to include plural forms as well, unless the context clearly indicates otherwise. The meaning of "comprises" and/or "comprising" as used herein does not exclude the presence or addition of one or more other components besides a mentioned component.

As used herein, when an element "includes" a component, it may indicate that the element does not exclude another component unless explicitly described to the contrary, but may further include another component.

As used herein, the description "A and/or B" refers to A or B, or A and B.

As used herein, "%" indicates wt% unless indicated otherwise.

A pouch type battery case, a pouch type secondary battery, and a battery box described herein may include at least one of the technical components, which will be described later, and may include any combination of technically feasible components among the following technical components.

### Pouch type battery case

A pouch type battery case according to the present invention includes a cup portion provided with an accommodation space for accommodating an electrode assembly, a terrace portion formed along a perimeter of the accommodation portion, and at least one gas discharge portion, wherein each of the gas discharge portions includes a through hole formed in at least one of the cup portion or the terrace portion, a gas permeable film covering the through hole from the inside of the battery case, and a polymer-based protection film covering the through hole from the outside of the battery case.

Generally, the gas discharge performance of a gas discharge portion is determined by the properties of materials constituting the gas discharge portion. The properties of materials may dictate moisture penetration prevention performance and electrolyte leakage prevention performance, and gas permeability, which also varies depending on materials, thus makes materials constituting the gas discharge portion a deciding factor.

However, when a through hole is formed in the case, despite controlling the liquid permeability of the gas permeable film covering the through hole, there is a limit to preventing moisture penetration from the outside, and when the through hole is filled with another material to prevent moisture penetration, gas discharge performance may be significantly reduced.

Accordingly, a design is to be applied where the through hole is covered from the outside of the pouch type battery case using a polymer-based protection film to prevent moisture penetration without affecting gas permeation performance, independent of the dimensional or material design of the gas permeable film applied to the gas discharge portion.

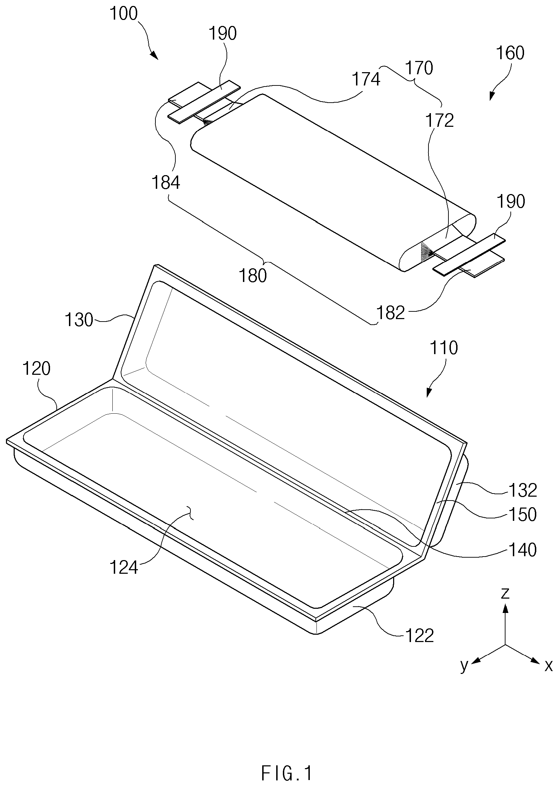

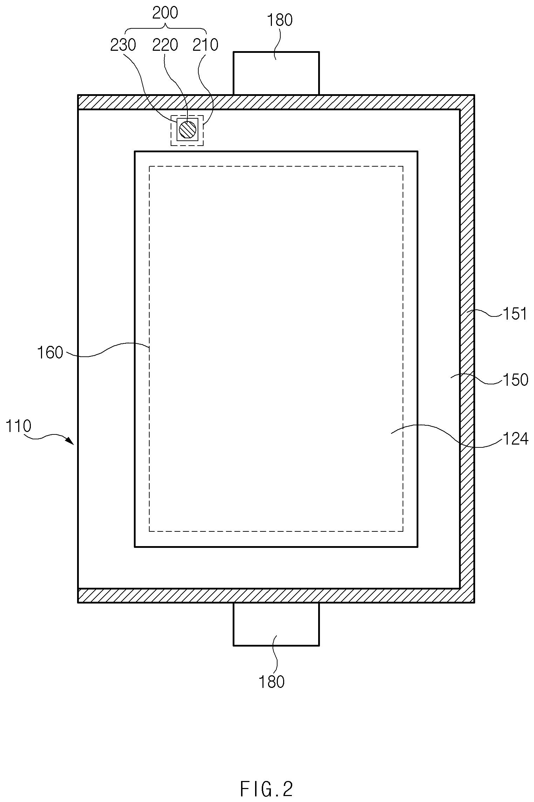

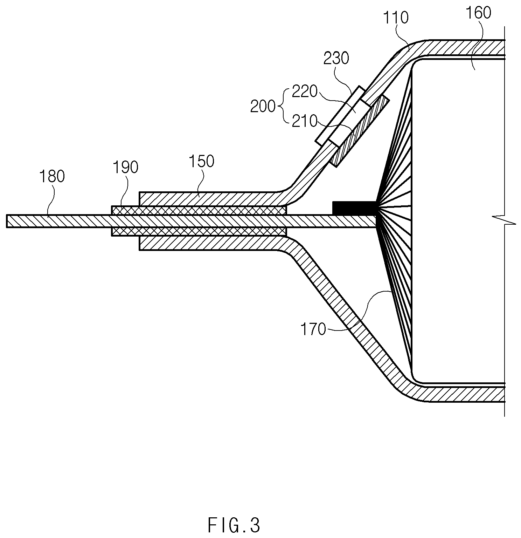

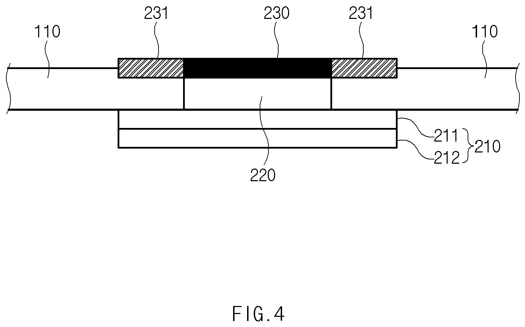

FIG. 1 is an exploded view of a pouch type secondary battery 100 according to the present invention, FIG. 2 is a plan view of a pouch type secondary battery 100, FIG. 3 is a cross-sectional view of a portion in which a gas discharge portion is provided in a pouch type battery case of a pouch type secondary battery, and FIGS. 4 to 6 are enlarged cross-sectional views showing a portion in which a gas discharge portion is provided in a pouch type battery case of a pouch type secondary battery. In FIG. 2, some components of the pouch type secondary battery 100 are not provided for convenience of understanding. As shown in FIGS. 1 to 6, the pouch type secondary battery 100 of the present invention includes a pouch type battery case 110 including a gas discharge portion 200 according to the present invention, an electrode assembly 160, an electrode lead 180, and a lead film 190.

Hereinafter, referring to FIGS. 1 to 6, the pouch type battery case 110 and the pouch type secondary battery 100 of the present invention will be described.

According to an embodiment of the present invention, the pouch type battery case 110 includes cup portions 122 and 132 provided with an accommodation space for accommodating an electrode assembly, a terrace portion 150 formed along a perimeter of the accommodation portion, and at least one gas discharge portion 200, wherein the gas discharge portion 200 includes a through hole 220 formed in at least one of the cup portion or the terrace portion, a gas permeable film 210 covering the through hole 220 from the inside of the battery case 110, and a polymer-based protection film 230 covering the through hole from the outside of the battery case 110.

### (1) Pouch film laminate

The pouch type battery case 110 may accommodate the electrode assembly 160 in an inner accommodation space. The pouch type battery case 110 may be manufactured by molding a pouch film laminate. In this case, the pouch type battery case 110 may include a substrate layer (not shown), a gas barrier layer (not shown), and a sealant layer (not shown). The substrate layer, the gas barrier layer, and the sealant layer may be sequentially stacked from the outside to the inside of the battery case.

The substrate layer is formed on an outermost layer of the pouch film laminate to protect a secondary battery against external friction and collision. The substrate layer is made of a polymer and may thus electrically insulate an electrode assembly from the outside.

The substrate layer may be made of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the substrate layer may be made of polyethylene terephthalate (PET), nylon, or a combination thereof, which has abrasion resistance and heat resistance.

The substrate layer may have a single film structure made of any one material. Alternatively, the substrate layer may have a composite film structure in which two or more materials are respectively formed as layers.

The substrate layer may have a thickness of 5 µm to 50 µm, specifically 7 µm to 40 µm, more specifically 25 µm to 38 µm. When the thickness of the substrate layer satisfies the above range, external insulation is excellent, and the entire pouch is not thick, and accordingly, energy density to volume of the secondary battery may be excellent.

The gas barrier layer is stacked between the substrate layer and the sealant layer to secure mechanical strength of the pouch, block the entry and exit of gases or moisture outside the secondary battery, and prevent electrolyte leakage from the inside of the pouch type secondary battery.

The gas barrier layer may be formed of metal, and may specifically be formed of an aluminum alloy thin film. When forming a gas barrier layer using an aluminum alloy thin film, gas barrier layer may have a predetermined level of mechanical strength and also be light in weight, and may complement electrochemical properties caused by the electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 µm to 100 µm, specifically 50 µm to 90 µm, more specifically 55 µm to 85 µm. When the thickness of the gas barrier layer satisfies the above range, moldability and gas barrier performance are excellent when molding a cup portion.

The sealant layer is thermally bonded together at a sealing portion when the pouch type battery case accommodating the electrode assembly inside is sealed to completely seal the inside of the pouch type battery case. To this end, the sealant layer may be formed of a material having excellent heat sealing strength.

The sealant layer may be formed of a material having insulation, corrosion resistance, and sealing properties. Specifically, the sealant layer is in direct contact with the electrode assembly and/or electrolyte inside the pouch type battery case, and may thus be formed of a material having insulation and corrosion resistance. In addition, the sealant layer is supposed to completely seal the inside of the pouch type battery case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

The sealant layer may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber, and may preferably be made of a polyolefin-based resin such as polypropylene (PP) and/or polyethylene (PE). In this case, the polypropylene may be composed of cast polypropylene (CPP), acid modified polypropylene (PPa), polypropylene-ethylene copolymer, and/or polypropylene-butylene-ethylene terpolymer.

The sealant layer may have a thickness of 30 µm to 130 µm, specifically 50 µm to 120 µm, and more specifically 70 um to 100 µm. When the thickness of the sealant layer satisfies the above range, there is an effect of both securing the sealing strength of a sealing portion and securing the formability of a pouch film laminate.

Meanwhile, the pouch film laminate may be drawn, molded, or stretched by a punch or the like to manufacture the pouch type battery case 110. Accordingly, the pouch type battery case 110 may include a cup portion 122 and an accommodation portion 124. The accommodation portion 124 is a place to accommodate the electrode assembly, and may indicate an accommodation space formed in the shape of a pocket inside the cup portion 122 as the cup portion 122 is formed.

According to an embodiment of the present invention, the pouch type battery case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

According to another embodiment of the present invention, when forming a cup portion in a pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the pouch type battery case 110, and accordingly, the number of edges to be sealed may be reduced when a sealing process is performed later. Accordingly, the process speed of the pouch type secondary battery 100 may be improved and the number of sealing processes may be reduced.

As described in FIG. 2, the pouch type battery case 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, as described above, an electrolyte is injected into the accommodation portion 124 and a portion of the terrace portion 150 formed along a perimeter of the first case 120 and the second case 13) may be sealed to form a sealing portion 151.

The sealing portion 151 may serve to seal the accommodation portion 124. Specifically, the sealing portion may seal the accommodation portion 124 by being formed on the terrace portion 150 formed along the perimeter of the accommodation portion 124.

The temperature at which the sealing portion 151 is sealed may be 180 °C to 250 °C, specifically 200 °C to 250 °C, and more specifically 211 °C to 240 °C. When the sealing temperature satisfies the numerical range described above , the pouch type battery case 110 may obtain sufficient sealing strength through thermal bonding.

### (2) Gas discharge portion

According to an embodiment of the present invention, at least one gas discharge portion 200 of the pouch type battery case 110 includes a through hole formed in at least one of the cup portion or the terrace portion, a gas permeable film covering the through hole from the inside of the battery case, and a polymer-based protection film covering the through hole from the outside of the battery case.

While a greater through hole area in the gas discharge portion 200 improves gas discharge performance, increasing the area of the through hole 220 for the gas discharge performance adversely impacts moisture penetration prevention performance. Even when dimensional design and materials are controlled to maximize performance, clear limitations certainly exist. Accordingly, the present invention provides a gas discharge portion additionally provided with a polymer-based protection film covering the through hole from the outside of the battery case.

Hereinafter, the gas discharge portion 200 of the present invention will be described in more detail with reference to FIGS. 2 to 4. FIG. 2 is a plan view of a pouch type secondary battery showing an example of position where a gas discharge portion 200 is formed, FIG. 3 is a cross-sectional view of a pouch type secondary battery at a portion where a gas discharge portion 200 is formed, and FIGS. 4 to 6 are enlarged cross-sectional views showing the gas discharge portion 200 of FIG. 3.

According to an embodiment of the present invention, the gas discharge portion 200 may be formed in at least one position selected from a terrace portion 150 and cup portions 122 and 132 positioned adjacent to the terrace portion 150 and having no internal contact with an electrode assembly. In this case, the cup portions 122 and 132 and the accommodation portion 124 may not be substantially distinguished in structure, and the indented portion formed by molding in the pouch type battery case 110 may be named the cup portions 122 and 132, and an accommodation space formed by these indentations may be named the accommodation portion 124.

Referring to FIGS. 2 and 3, the gas discharge portion 200 may be formed in the terrace portion 150 instead of the sealing portion 151, and may be formed in the cup portion 122 or the accommodation portion 124 adjacent to the terrace portion 150. In particular, the electrode assembly 160 is accommodated and sealed inside the pouch type battery case 110 to form a sealing portion 151, and it may be preferable to form the sealing portion 151 in the a cup portion 122, which is a space where the electrode assembly 160 and the pouch type battery case 110 are not in direct contact, that is, a portion of the cup portion 122, which is a space where the electrode tab 170 is withdrawn from the electrode assembly 160 for electrical connection to the outside and comes into contact with the electrode lead 180.

In this case, the gas discharge portion 200 may be formed as a single unit, or may be provided as two or more units, and the number of gas discharge portions 200 may be designed in consideration of the characteristics of cells applied inside, such as whether a large or small amount of gas is generated, and each gas discharge portion 200, when provided with the polymer-based protection film 230 described above, may exhibit excellent performance in moisture blocking, and thus there is no particular limitation on the number thereof.

As shown in FIG. 3, the gas discharge portion 200 may have a gas permeable film 210 adhered (indicated by the dashed box) inside the pouch type battery case 110 to close the through hole 220, and a polymer-based protection film 230 adhered (indicated by the solid box) outside the pouch type battery case 110 to secondarily close the through hole 220. In this case, the portion where the gas permeable film 210 and the pouch type battery case 110 come into contact may be sealed by methods such as heat fusion, bonding/adhesion using a bonding agent/adhesive, or bonding/adhesion using a bonding/adhesive film.

Referring to FIG. 4, the gas discharge portion 200 shown in FIG. 3 may be seen enlarged, and an adhesive resin layer 211 of the gas permeable film 210 may be disposed to come into contact with a sealant layer of the pouch type battery case 110.

In addition, according to an embodiment of the present invention, the polymer-based protection film 230 may be provided with a case adhesive portion 231 that comes into contact with a substrate T1 layer of the pouch type battery case 110 around the through hole 220, and in this case, the case adhesive portion 231 may be a portion of the polymer-based protection film 230 inserted into the inside of the battery case 110. In this case, the inserted case adhesive portion 231 may be integrated with the pouch type battery case 110 and serve as a single resin layer, which may be effective in blocking moisture from the outside.

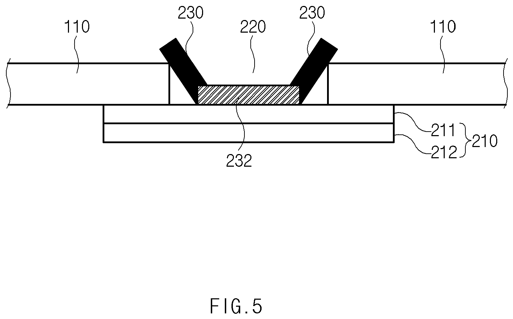

Meanwhile, referring to FIG. 5, the gas discharge portion 200 according to an embodiment of the present invention may form a film adhesive portion 232 in a region where the gas permeable film 210 and the polymer-based protection film 230 come into contact, unlike in FIG. 4. That is, the polymer-based protection film 230 covers the through hole 220 from the outside of the battery case 110, but the polymer-based protection film 230 in the through hole 220 may be designed to be inserted into the through hole and come into contact with the gas permeable film 210 covering the through hole 220 from the inside. In this case, the gas discharge portion 200 may be formed by sealing (via heat fusion, bonding/adhesion, or the like) some or all of the area where the polymer-based protection film 230 and the gas permeable film 210 come into contact. In this case, the gas discharge performance may be controlled depending on the area of the film adhesive portion 232, and moisture penetration may also be prevented due to the polymer-based protection film 230 of the remaining portion protruding from the film adhesive portion 232 to the outside of the through hole 220.

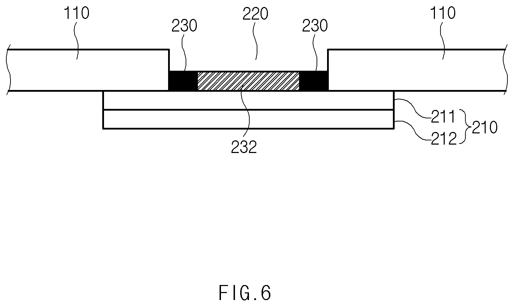

In addition, referring to FIG. 6, the gas discharge portion 200 according to an embodiment of the present invention may be provided with the polymer-based protection film 230 precisely designed to match the dimensions of the through hole 220. While the film adhesive portion 232 may be formed in a region contacting the gas permeable film 210, a region to be sealed may be smaller compared to cases where the polymer-based protection film 230 is larger than the area of the through hole 220.

In this case, the region to be sealed, that is, the area of the film adhesive portion 232, may be appropriately controlled, and the gas discharge portion 200 may be designed in consideration of the required gas discharge performance, depending on battery components mounted inside, such as the components of a positive electrode, a negative electrode, or an electrolyte, or depending on the purpose for which the battery is used.

Accordingly, according to an embodiment of the present invention, the polymer-based protection film 230 may have an area greater than or equal to the area of the through hole 220, and the film adhesive portion 232 may have an area smaller than or equal to the area of the through hole 220. Preferably, the area of the polymer-based protection film 230 may be 100% to 200% of the area of the through hole 220, and the area of the film adhesive portion 232 may be 50% to 100%, more preferably 50% to 90%, or 50% to 85%, and most preferably 50% to 80% of the area of the through hole 220.

As shown in FIGS. 3 to 6, when the gas discharge portion 200 in which the through hole 220 is formed is covered from both inside and outside the battery case to prevent moisture penetration, moisture penetration performance may be improved without degrading gas discharge performance, and materials may be designed to allow not only the function of the polymer-based protection film 230 but also the function of the gas permeable film 210, which may be an effective method to reduce the amount of moisture penetration while minimizing the degradation of gas discharge performance. Preferably, as shown in FIG. 4, forming a polymer-based protection film 230 may further maximize the effect of preventing moisture penetration, and in the case of the structure of FIG. 4, there is a space that serves as a gas pocket between the gas permeable film 210 and the polymer-based protection film 230, and accordingly, the degradation of gas discharge performance may be minimized compared to the case where the polymer-based protection film 230 is not applied. When adhered in the pouch type battery case 110 as shown in FIG. 4, sealing effects similar to those achieved by sealing through heat fusion or sealing through an adhesive may be expected.

According to an embodiment of the present invention, the polymer-based protection film 230 may be made of various materials. As shown in FIG. 5 or 6, in the case of forming the gas permeable film 210 and the adhesive portion 232, it may be preferable to use the same type of material as the gas permeable film 210, particularly the adhesive resin layer 211 on the side contacting the battery case.

The polymer-based protection film 230 may include at least one material selected from the group consisting of, for example, polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, polytetrafluoroethylene, fluorinated ethylene propylene copolymer, perfluoroalkoxy-substituted polytetrafluoroethylene, ethylene tetrafluoroethylene copolymer, and glass fiber, preferably may include a polyolefin resin such as polypropylene (PP) and/or polyethylene (PE), or a fluorine resin such as polytetrafluoroethylene, fluorinated ethylene propylene copolymer, perfluoroalkoxy-substituted polytetrafluoroethylene, and ethylene tetrafluoroethylene copolymer, and more preferably may include a fluorine resin such as polytetrafluoroethylene, fluorinated ethylene propylene copolymer, perfluoroalkoxy-substituted polytetrafluoroethylene, and ethylene tetrafluoroethylene copolymer. In this case, the polypropylene may include cast polypropylene (CPP), acid modified polypropylene (PPa), polypropylene-ethylene copolymer, and/or polypropylene-butylene-ethylene terpolymer.

The acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

In addition, the polymer-based protection film 230 may form a multilayer structure, although not shown in FIGS. 4 to 6. For example, a sealing layer may be provided in a portion where the adhesive portions 231 and 232 are formed, a blocking layer may be provided on the sealing layer, and at least one separate intermediate layer may be included between the sealing layer and the blocking layer. Forming such a multilayer structure may be more beneficial as it allows for the configuration of a layer including heat-fusible resin when sealing a polymer-based protection film using heat fusion. For example, in the case of attaching a polyethylene terephthalate film or a polyimide film to a pouch type battery case through an adhesive film or an adhesive, a single layer polymer-based protection film may be applied in addition to the adhesive layer, and in the case of using heat fusion, a multilayer polymer-based protection film combined with a fusible material such as polypropylene or polyethylene may be applied.

Furthermore, according to an embodiment of the present invention, the polymer-based protection film may include a water-repellent coating layer on a surface exposed to the outside of the battery case, and may independently include a ceramic filler internally.

The water-repellent coating layer may greatly contribute to the performance of blocking moisture from the outside. For example, the water-repellent coating layer may be formed by controlling a contact angle of a surface of a blocking layer exposed to the outside, by forming a coating layer on a blocking layer using a hydrophobic material, or by applying a barrier layer as a hydrophobic material. This contact angle may be achieved by injecting a filler on the blocking layer to control surface irregularity, or by controlling the roughness of a roller during blocking layer extrusion.

In addition, the ceramic filler, when included in the polymer-based protection film, may absorb incoming moisture, and also serve to absorb by-products generated by moisture, such as hydrogen fluoride (HF), and may also enhance the strength of the film, thereby improving the ability to prevent damage from external physical factors. The ceramic filler may be included in at least one layer of the multilayer structure layers constituting the polymer-based protection film, and may be added to control the irregularity of the blocking layer surface. While the position of the layer into which the ceramic filler is added may not be particularly limited if the content is controlled to a level that doesn't degrade the durability of the film, it may be preferable to include the ceramic filler in an internally located layer for the effective removal of moisture and by-products resulting from moisture.

The ceramic filler may include at least one selected from the group consisting of CaCO₃, Ca(OH)₂, CaCl₂, CaO, KOH, NaOH, and Na₂CO₃, and preferably may be CaCO₃.

Meanwhile, according to an embodiment of the present invention, as shown in FIGS. 4 to 6, the gas discharge portion 200 includes an adhesive resin layer 211 in contact with the pouch type battery case 110 and a permeable resin layer 212 disposed on the adhesive resin layer 211.

The adhesive resin layer 211 is in contact with the pouch type battery case 110 and is intended to adhere the gas discharge portion 200 to the pouch type battery case 110, and may include any material that facilitates adhesion to the pouch type battery case 110. Specifically, the adhesive resin layer 211 may include a non-fluorinated polyolefin resin, and preferably, may include a modified polyolefin resin.

When the adhesive resin layer 211 includes a modified polyolefin resin, adhesive strength between the gas discharge portion 200 and the pouch type battery case 110 is improved, and thus, even when a pouch type secondary battery is stored in a high-temperature environment, the gas discharge portion 200 may be prevented from being detached from the pouch type battery case 110, thereby preventing the leakage of electrolyte inside the pouch and moisture penetration.

For example, the adhesive resin layer 211 may include at least one of acid modified polyolefin or silane-modified polyolefin.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive force between the gas discharge portion 200 and the electrode lead 180. The acid modified polyolefin may include at least one selected from the group consisting of acid modified polypropylene (PPa) and acid modified polyethylene (PEa), but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

The adhesive resin layer 211 may be modification-treated, and examples of the modification treatment include ion implantation treatment, plasma treatment, irradiation treatment, heat treatment, and the like, and treatment that changes the bonding structure of a polymer layer is preferred. These modification treatments may be performed individually, or may be performed in combination of two or more types. The modification-treated adhesive resin layer 211 may include plasma-treated polypropylene (PP), but is not limited thereto.

The adhesive resin layer 211 may have a thickness of 20 µm to 250 µm, specifically 30 µm to 200 µm, and more specifically 30 µm to 150 µm. When the thickness of the adhesive resin layer 211 satisfies the above numerical range, the adhesive resin layer 211 melts within the specified tact time and accordingly, the gas discharge portion 200 and the pouch type battery case 110 may be easily fused.

According to an embodiment of the present invention, the permeable resin layer 212 may be a layer that comes into contact with the adhesive resin layer 211 to facilitate gas discharge.

The permeable resin layer 212 may include a fluorinated polyolefin resin, and preferably, may include at least one of polytetrafluoroethylene (PTFE) or polyimide (PI).

The permeable resin layer 212 may have a thickness of 30 µm to 200 µm, specifically 40 µm to 150 µm, and more specifically 45 µm to 100 µm. When the thickness of the permeable resin layer 212 satisfies the above numerical range, the gas discharge function may be smoothly performed without the gas discharge portion 200 being detached due to venting even when the internal pressure of the pouch type battery case 110 increases.

Meanwhile, according to an embodiment of the present invention, the gas permeable film 210 may have a thickness (T_{F}) of 80 µm to 500 µm, specifically, 80 µm to 450 µm, 80 µm to 400 µm, 90 µm to 350 µm, and more preferably 100 µm to 300 µm. When the above range is satisfied, the thickness ratio of the adhesive resin layer 211 and the permeable resin layer 212 constituting the gas permeable film 210 may be easily adjusted, and design considering adhesive strength and gas discharge performance may be facilitated.

A ratio (T_{A}/T_{T}) of the thickness (T_{A}) of the adhesive resin layer 211 to the thickness (T_{T}) of the permeable resin layer 212 may be 0.4 to 2.0, specifically 0.4 to 1.5, more specifically 0.4 to 1.2, and preferably 0.5 to 1.0. When the above ratio (T_{A}/T_{T}) satisfies the above numerical range, a gas discharge portion 200 that may discharge gas while maintaining adhesive strength without permanent damage to the gas discharge portion 200 due to venting and minimizing the pressure at which the gas discharge portion 200 starts operating may easily be achieved, and it may be desirable to satisfy the above range in designing a moisture blocking index.

Accordingly, the pouch type battery case according to embodiment of the present invention has a gas discharge portion as described above, and may thus significantly improve the performance of preventing electrolyte leakage and moisture penetration at a satisfactory level of gas discharge performance. Consequently, this may prevent corrosion due to generated gas or corrosion due to moisture penetration or electrolyte leakage, thereby contributing to improving lifespan due to increased durability, the driving performance of cells may be maintained through continuous gas discharge, and the risk of explosion caused by swelling is also reduced, thereby ensuring safety.

### Pouch type secondary battery

According to another embodiment of the present invention, provided is a pouch type secondary battery 100 including an electrode assembly 160, the pouch type battery case 110 as described above, an electrode lead 180 connected to the electrode assembly 160 and protruding to the outside of the pouch type case 110 via the terrace portion 150, and a lead film 190 disposed between the electrode lead 180 and the pouch type case 110 on the terrace portion 150, where a portion of the terrace portion 150 is sealed along a perimeter of the cup portions 122 and 132 to form a sealing portion 151.

Descriptions of the pouch type battery case 110 and the gas discharge portion (200 provided in the pouch type battery case 110 overlap ones described above, and thus the descriptions thereof will be skipped. Hereinafter, other components included in the pouch type secondary battery 100 will be described.

### (1) Electrode assembly

According to an embodiment of the present invention, the electrode assembly 160 may be accommodated in the accommodation portion 124 of the pouch type battery case 110 and sealed by a sealing portion 151 formed through thermal fusion of the terrace portion 150 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

Referring to FIG. 1, the electrode tab 170 is connected to each of the positive electrode and the negative electrode of the electrode assembly 160, and protrudes outward from the electrode assembly 160, and may thus serve as a path through which electrons move between the inside and the outside of the electrode tab. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (2) Electrode lead

According to an embodiment of the present invention, the electrode lead 180 may supply electricity to the outside of the secondary battery 100. The electrode lead 180 may be connected to the electrode tab 170 of the electrode assembly 160 through spot welding, or the like.

Referring to FIGS. 1 and 3, the electrode lead 180 may be connected to the electrode assembly 160 and may protrude to the outside of the pouch type battery case 110 via the terrace portion 150. Specifically, one end of the electrode lead 180 may be connected to the electrode assembly 160, particularly to the electrode tab 170, and the other end of the electrode lead 180 may protrude to the outside of the pouch type battery case 110 via the terrace portion 150.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190 and/or the gas discharge portion 200, may be coated with at least one selected from the group consisting of chromium (Cr), nickel (Ni), aluminum oxide (Al₂O₃), zirconium (Zr)-based anhydride salt, and titanium (Ti)-based anhydroxide salt. In this case, corrosion resistance against an electrolyte solution and adhesion to the lead film 190 and/or the gas discharge portion 200 may be obtained.

### (3) Lead film

According to an embodiment of the present invention, the lead film 190 may prevent electricity generated from the electrode assembly 160 from flowing to the battery case 110 through the electrode lead 180, and allow the sealing of the battery case 110 to be maintained. To this end, the lead film 190 may be formed of a non-conductor having non-conductive properties in which electricity does not flow well. In general, as the lead film 190, relatively thin insulation tape easily attached to the electrode lead 180 and/or the gas discharge portion 200 is widely used, but the embodiment of the present invention is not limited thereto, and thus any member capable of insulating the electrode lead 180 may be used.

The lead film 190 may be disposed to surround an outer circumferential surface of the electrode lead 180. The lead film 190 may be placed to be limited within the terrace portion 150 where the sealing portion 151 in which the first case 120 and the second case 130 of the pouch type battery case 110 are thermally fused is located, and may make the electrode lead 180 adhere to the battery case 110.

The lead film 190 may be disposed between the electrode lead 180 and the pouch type battery case 110. For example, as shown in FIG. 3, a lower case 110, a lead film 190, an electrode lead 180, a lead film 190, and an upper case 110 may be stacked and disposed in this order in the terrace portion 150.

Meanwhile, the lead film 190 may include at least one layer. Specifically, the lead film 190 may include a metal adhesive layer, a core layer, and a pouch adhesive layer, which are sequentially stacked.

The metal adhesive layer is in direct contact with the electrode lead 180 and may be used to make the lead film 190 adhere to the electrode lead 180. The metal adhesive layer may include any material that easily adheres to the electrode lead 180. Specifically, the metal adhesive layer may include acid modified polyolefin. For example, the metal adhesive layer may include at least one of acid modified polypropylene (PPa), acid modified polyethylene (PEa), or plasma-treated polypropylene (PP), but is not limited thereto. The metal adhesive layer may have a thickness of 50 µm to 80 µm, specifically 50 µm to 75 µm, more specifically 60 µm to 75 µm. When the thickness of the metal adhesive layer satisfies the above numerical range, there is an effect of preventing penetrated pinholes and leaks at an edge portion during fusion between the electrode lead and the lead film.

The core layer may be a layer placed at the center of the lead film 190. The core layer may include additives such as polypropylene, polyolefin elastomer (POE), and/or colorant, but is not limited thereto. In particular, the polymer included in the core layer may be a homopolymer. When the homopolymer is included in the core layer, the melting point of the core layer may be controlled within the above numerical range and deformation caused by heat may be minimized, which serves better for securing insulation. The core layer may have a thickness of 40 µm to 70 µm, specifically 50 µm to 70 µm, and more specifically 60 µm to 70 µm. When the thickness of the core layer satisfies the above numerical range, deformation caused by heat applied upon fusion and sealing may be prevented to bring about a robust design effect in terms of securing insulation.

The pouch adhesive layer may be a layer in direct contact with the battery case 110, specifically the sealant layer of the pouch film laminate. The pouch adhesive layer may include polypropylene or polyolefin elastomer (POE), but is not limited thereto. In particular, the polymer included in the pouch adhesive layer may be a copolymer. The melting point of the pouch adhesive layer including a copolymer may be controlled within the above numerical range, and the pouch adhesive layer has a melting point similar to that of the polymer in the sealant layer of the pouch film laminate, which serves better for securing sealing processability. The pouch adhesive layer may have a thickness of 40 µm to 100 µm, specifically 40 µm to 80 µm, more specifically 40 µm to 60 µm. When the thickness of the pouch adhesive layer satisfies the above numerical range, there is an effect of securing a polymer (e.g., polypropylene) residual rate sufficient to obtain strength for sealing between the electrode lead and the pouch film laminate.

### (4) Electrolyte

The pouch type secondary battery 100 according to the present invention may further include an electrolyte (not shown) injected into the pouch type battery case 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

### Battery box

According to an embodiment of the present invention, provided is a battery box including the pouch type secondary battery. The battery box according to an embodiment of the present invention may include the pouch type secondary battery and a packaging in which the pouch type secondary battery is accommodated. The pouch type secondary battery may be configured to charge and discharge electric energy, and in this case, the pouch type secondary battery may be a secondary battery according to an embodiment of the present invention described above.

To increase the electric capacity or voltage of the battery box, a plurality of the pouch type secondary battery may be configured. The plurality of pouch type secondary batteries may be arranged in a predetermined manner, for example, may be stacked in one direction, but the arrangement method of the pouch type secondary batteries is not particularly limited.

The packaging may be configured to accommodate the secondary battery and protect the secondary battery from external contamination or impact. For example, the packaging may have a casing shape, but the structure or shape of the packaging is not particularly limited as long as it is capable of accommodating the secondary battery.

In addition, components that perform a predetermined function may be installed in the packaging for the operation or safety of the battery box according to an embodiment of the present invention. For example, The packaging may also be equipped with connectors or busbars to electrically connect the secondary battery to the outside, and a vent plug to connect the inside and outside of the packaging.

The battery box may be used to include, for example, a battery module or a battery pack, and may encompass an assembly of a packaging and a battery cell in which a plurality of secondary batteries are accommodated within the packaging.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Manufacturing of pouch type battery case

A polyethylene terephthalate (PET) film having a width of 266 mm, a length of 50 m, and a thickness of 12 µm and a nylon film having a width of 266 mm, a length of 50 m, and a thickness of 25 µm were stacked on one side of an aluminum alloy thin film having a width of 266 mm, a length of 50 m, and a thickness of 60 µm, and a polypropylene film having a width of 266 mm, a length of 50 m, and a thickness of 80 µm was stacked on the other side to prepare a pouch film laminate having a structure of polyethylene terephthalate/nylon/aluminum alloy thin film/polypropylene film. In this case, the polyethylene terephthalate film and the nylon film are substrate layers, the aluminum alloy thin film is a gas barrier layer, and the polypropylene film is a sealant layer.

The pouch film laminate was molded to manufacture a pouch type battery case including an accommodation portion and a terrace portion, a through hole was formed on the accommodation portion (cup portion) adjacent to the terrace portion as in FIG. 3, a gas permeable film was thermally fused inside the pouch type battery case, and a polymer-based protection film was adhered via heat fusion to the outside of a pouch-type battery case to form a gas discharge portion having the structure as shown in FIG. 3.

In this case, the gas permeable film used was a film combined with a 100 µm thick acid-modified polypropylene (PPa) as an adhesive resin layer and a 100 µm thick polytetrafluoropropylene (PTFE) as a permeable resin layer, and the polymer-based protection film used was an 80 µm thick polytetrafluoroethylene (PTFE) tape.

### (2) Manufacturing of pouch type secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF₆ was dissolved in a solvent (EC:EMC:DMC = volume ratio of 3:3:4 ) to 1.0 M to prepare an electrolyte. The electrode assembly was accommodated in the pouch type battery case with a front end of the electrode lead protruding to the outside, and the electrolyte was injected.

Then, a 200 µm thick lead film was stacked on each of a lower surface of the electrode lead and an upper surface of the gas discharge portion. The lead film may include a 75 µm thick metal adhesive layer containing copolymer polypropylene and acid modified polypropylene, a 65 µm thick core layer containing homopolymer polypropylene, and a 60 µm thick pouch adhesive layer containing copolymer polypropylene.

Thereafter, the sealing portion of the pouch type battery case was sealed for 2 seconds in the conditions of a seal bar area of 200 mm × 10 mm, 212 °C, and 0.27 MPa, and then left at 60 °C for 4 hours to manufacture a pouch type secondary battery.

### Example 2

A pouch type secondary battery was manufactured in the same manner as in Example 1, except that sealing via an adhesive instead of heat fusion was applied using a cast polypylene (cPP) tape (an acrylic polymer-based adhesive) having a thickness of 80 µm as a polymer-based protection film to form a gas discharge portion.

### Example 3

A pouch type secondary battery was manufactured in the same manner as in Example 1, except that sealing via an adhesive instead of heat fusion was applied using a cast polypylene (cPP) tape (a natural rubber (isoprene)-based adhesive) having a thickness of 80 µm as a polymer-based protection film to form a gas discharge portion.

### Comparative Example 1

A pouch type secondary battery was manufactured in the same manner as in Example 1, except that a polymer-based protection film was not applied to form a gas discharge portion.

### Comparative Example 2

A pouch type secondary battery was manufactured in the same manner as in Example 1, except that sealing via an adhesive instead of heat fusion was applied using an acrylic double-sided tape (3M, 4910 vhb) having a thickness of 1,013 µm as a polymer-based protection film to form a gas discharge portion.

### Comparative Example 3

A pouch type secondary battery was manufactured in the same manner as in Example 1, except that sealing via an adhesive instead of heat fusion was applied using an aluminum foil (an acrylic polymer-based adhesive) having a thickness of 50 µm as a polymer-based protection film to form a gas discharge portion.

### Experimental Example 1: Evaluation of gas discharge portion

The properties of the gas permeable film were measured and the performance was evaluated through the following method for the following items.
1) Observation of gas discharge rate (cc/day) and detachment: Using an internal pressure device from ITS, CO₂ was injected into a pouch type secondary battery to increase the internal pouch pressure to 1.5 atm or 2.0 atm, and then the amount of gas discharged for 24 hours at 60°C was measured, and whether a polymer-based protection film detached due to case deformation caused by the increase in internal pouch pressure was observed. The results are shown in Table 1 below.
2) HF concentration (ppm): A pouch type secondary battery was left for one week at 60°C and 90% relative humidity, and then the secondary battery was opened and 20 g of electrolyte was collected to measure HF concentration (in ppm by weight) so as to evaluate the extent of moisture penetration. The results are shown in Table 1 below.
3) Tensile strength (N/15 mm): A polymer-based protection film was cut into a size of 15 mm (MD) x 10 mm (TD), and then using a UTM (Universal Testing Machine) from ZwickRoell, the polymer-based protection film was clamped onto upper and lower jigs according to a method of ASTM D638, and pulled at a speed of 5 mm/min with a gap distance of 30 mm to determine a maximum value of force (N) applied up to the point of breakage. Generally, the unit of tensile strength is N/mm², but in this case, the maximum force up to the point of breakage for a 15 mm long sample was measured without considering the thickness of each film, so the unit is expressed as N/15 mm.

**[Table 1]**

| | Discharge rate (@1.5 atm, cc/day) | Discharge rate (@2.0 atm, cc/day) | HF concentration (ppm, wt) | Tensile strength (N/15 mm) | Presence of detachment |
|---|---|---|---|---|---|
| Example 1 | 2.6 | 6.1 | 619.4 | 14.7 | X |
| Example 2 | - | 5.3 | 905.7 | 7.7 | X |
| Example 3 | - | 4.8 | 917.5 | 8.1 | X |
| Comparative Example 1 | 3.2 | - | 1010.0 | - | X |
| Comparative Example 2 | - | 6.9 | 857.5 | 0.6 | X |
| Comparative Example 3 | - | 6.3 | 865.2 | 63.8 | O |

According to Table 1 above, in the case of Example 1, the gas discharge rate is not much different from that of Comparative Example 1, which does not apply a polymer-based protection film, but when the polymer-based protection film is not applied, the HF concentration is found to significantly increase compared to Examples in which the HF concentration is applied. For reference, in the case of the gas discharge rate, the discharge amount is measured in cc units for 24 hours, so the difference between Examples and Comparative Examples is not significant, but the HF concentration is an important factor that needs to be controlled because battery performance itself may be rapidly degraded when the HF concentration exceeds a certain level.

In addition, compared to Examples, the film of Comparative Example 2, i.e., a double-sided tape, is thick enough to prevent moisture penetration to some extent and also exhibits satisfactory gas discharge performance, but shows low tensile strength, indicating commercial infeasibility, and it is determined that Comparative Example 3 using an aluminum foil exhibits high tensile strength, the lack of flexibility of the material itself prevents it from accommodating deformations such as swelling of the pouch-type battery case, resulting in detachment.

Conversely, it is determined that Examples 1 to 3 using a polymer-based protection film may maintain gas discharge performance to the maximum extent possible, prevent moisture penetration, maintain tensile strength at a certain level or higher, and accommodate deformations of the pouch type battery case through the flexibility of the material itself.

### [Description of Symbols]

- 100:: Pouch type secondary battery
- 110:: Pouch type battery case
- 120:: First case
- 122:: Cup portion
- 124:: Accommodation portion
- 130:: Second case
- 132:: Cup portion
- 140:: Bridge portion
- 150:: Terrace portion
- 151:: Sealing portion
- 160:: Electrode assembly
- 170:: Electrode tab
- 172:: Positive electrode tab
- 174:: Negative electrode tab
- 180:: Electrode lead
- 182:: Positive electrode lead
- 184:: Negative electrode lead
- 190:: Lead film
- 200:: Gas discharge portion
- 210:: Gas permeable film
- 211:: Adhesive resin layer
- 212:: Permeable resin layer
- 220:: Through hole
- 230:: Polymer-based protection film
- 231:: Case adhesive portion
- 232:: Film adhesive portion

## Claims

1. A pouch type battery case comprising:
a cup portion provided with an accommodation space for accommodating an electrode assembly;
a terrace portion formed along a perimeter of the accommodation portion; and
at least one gas discharge portion,
wherein each of the gas discharge portions comprises:
a through hole formed in at least one of the cup portion or the terrace portion;
a gas permeable film covering the through hole from the inside of the battery case; and
a polymer-based protection film covering the through hole from the outside of the battery case.

2. The pouch type battery case of claim 1, wherein the polymer-based protection film comprises at least one selected from the group consisting of polypropylene, polyethylene, polytetrafluoroethylene, fluorinated ethylene propylene copolymer, perfluoroalkoxy-substituted polytetrafluoroethylene, and ethylene tetrafluoroethylene copolymer.

3. The pouch type battery case of claim 1, wherein the polymer-based protection film is provided with a case adhesive portion in contact with a battery case around the through hole, and
a portion of the polymer-based protection film is inserted into the battery case at the case adhesive portion.

4. The pouch type battery case of claim 1, wherein the polymer-based protection film is provided with a film adhesive portion in contact with the gas permeable film within the through hole.

5. The pouch type battery case of claim 4, wherein the polymer-based protection film has an area greater than an area of the through hole, and the film adhesive portion has an area smaller than the area of the through hole.

6. The pouch type battery case of claim 1, wherein the polymer-based protection film comprises a water-repellent coating layer on a surface exposed to the outside of the battery case.

7. The pouch type battery case of claim 1, wherein the polymer-based protection film comprises a ceramic filler therein.

8. The pouch type battery case of claim 7, wherein the ceramic filler comprises at least one selected from the group consisting of CaCO₃, Ca(OH)₂, CaCl₂, CaO, KOH, NaOH, and Na₂CO₃.

9. The pouch type battery case of claim 1, wherein the gas permeable film comprises an adhesive resin layer in contact with the battery case around the through hole, and a permeable resin layer disposed on the adhesive resin layer.

10. The pouch type battery case of claim 9, wherein the adhesive resin layer comprises a non-fluorinated polyolefin-based resin.

11. The pouch type battery case of claim 9, wherein the permeable resin layer comprises a fluorinated polyolefin-based resin.

12. The pouch type battery case of claim 1, wherein the gas discharge portion is formed in at least one position selected from the terrace portion, and the cup portion positioned adjacent to the terrace portion and having no internal contact with the electrode assembly.

13. The pouch type battery case of claim 1, wherein the gas discharge portion is disposed such that the adhesive resin layer comes into contact with the pouch type battery case.

14. A pouch type secondary battery comprising:
an electrode assembly;
the pouch type battery case according to claim 1;
an electrode lead connected to the electrode assembly and protruding to the outside of the pouch type battery case via the terrace portion; and
a lead film disposed between the electrode lead and the pouch type battery case on the terrace portion,
wherein a portion of the terrace portion is sealed along a perimeter of the cup portion to form a sealing portion.

15. A battery box comprising:
a plurality of pouch type secondary batteries according to claim 14; and
a packaging for accommodating the pouch type secondary batteries.
